# EUROPÄISCHE PATENTSCHRIFT

(11) **EP 1 295 469 B1**
(45) Veröffentlichungstag und Bekanntmachung des Hinweises auf die Patenterteilung: **14.06.2006**
(21) Anmeldenummer: 01933620.5
(22) Anmeldetag: 21.04.2001
(51) Int. Cl.: H04N 5/225

(54) **DIGITALKAMERA ODER DIGITALE VIDEOKAMERA UND VERFAHREN ZUR BILDERFASSUNG**
DIGITAL CAMERA OR DIGITAL VIDEO CAMERA AND METHOD FOR ACQUIRING IMAGES
APPAREIL PHOTO NUMERIQUE OU CAMERA VIDEO NUMERIQUE ET PROCEDE D'ENREGISTREMENT D'IMAGES

(30) Priorität: 25.04.2000 DE 10020261; 25.04.2000 DE 10020260
(43) Veröffentlichungstag der Anmeldung: 26.03.2003
(73) Patentinhaber: Mockler, Rainer, 74076 Heilbronn (DE)
(72) Erfinder: Mockler, Rainer, 74076 Heilbronn (DE)
(74) Vertreter: Manitz, Gerhart
(86) Internationale Anmeldenummer: PCT/DE2001/001533
(87) Internationale Veröffentlichungsnummer: WO 2001/082592

(56) Entgegenhaltungen:
- WO-A-95/15054
- DE-A- 19 720 200
- US-A- 5 200 818
- US-A- 5 508 734
- US-A- 5 800 341

## Beschreibung

Die Erfindung betrifft eine Digitalkamera oder digitale Videokamera mit einem Objektiv mit einem Sensor zur Erfassung und Digitalisierung einer Bildinformation und mit Mitteln zum Speichern der digitalisierten Bildinformation, wobei Mittel zur Erfassung, Digitalisierung und Speicherung der gesamten durch das ObjeKtiv abgebildeten und in einem Bildkreis enthaltenen Bildinformation vorgesehen sind.

### Stand der Technik

Eine Digitalkamera oder digitale Videokamera ist beispielsweise durch die US 5,508734 bekannt geworden.

Eine Kamera mit einem gravitations sensor ist aus der WO-A-95/15054 bekannt.

Bei bekannten Digitalkameras erfolgt mit Hilfe des Objektivs eine Projektion eines Bildes auf eine in der Digitalkamera: angeordnete Sensorfläche. Dabei entspricht das Format des aufgenommenen Bildes dem Format der Sensorfläche. Die Aufnahme und Speicherung der im Bildkreis des Objektivs enthaltenen Bildiformation vergrößert die Einsatzmöglichkeiten der Kamera.

Bei bekannten Großbildkameras wird ein Bild durch das Objektiv auf eine von einer Rückstandarte gehaltene Mattscheibe projiziert. Das Format des aufgenommenen Bildes wird vom Format der Mattscheibe bestimmt. Der Bildkreis ist in Relation größer. Dadurch, dass bei Großbildkameras die Rückstandarte und das Objektiv relativ zueinander und relativ zum Hauptgehäuse der Großbildkamera verschoben werden können, kann vor der Aufnahme eines Bildes ein Ausschnitt des vom Objektiv entworfenen Bildkreises ausgewählt werden. Das Verfahren der Parallelverschiebung von Objektiv zu Rückstandarte wird z.B. angewendet, wenn eine Frontalaufnahme eines Gegenstandes nicht möglich ist, da eine freie Sicht durch einen anderen Gegenstand gestört ist. In solchen Fällen kann die Aufnahme von einem seitlichen Standpunkt aus erfolgen und ist dennoch in allen Teilen identisch mit der Frontalaufnahme. Sollte bei der Parallelverschiebung ein Fehler unterlaufen sein, so kann dieser nach der Aufnahme nicht behoben werden, da die Auswahl des Bildausschnitts schon vorher erfolgen muss.

Unter APS-Kameras versteht man Kameras, bei denen vor der Aufnahme eines Bildes eines von drei Bildformaten ausgewählt werden kann. Die Auswahl des Bildformats wird mit dem jeweiligen Bild auf dem Film gespeichert, so dass bei der Entwicklung des Films keine Bildinformation verloren geht. Aber auch bei diesen Kameras muss die Auswahl des Bildformats und damit der Bildausschnitt aus dem dem Objektiv entworfenen Bildkreis schon vor der Aufnahme machen. Erst nach der Entwicklung des Films lässt sich feststellen, ob das richtige Format gewählt wurde und ob die gewünschte Bildinformation in dem aufgenommenen Bild enthalten ist..

### Aufgabe der Erfindung

Aufgabe der Erfindung ist es, eine Digitalkamera oder eine digitale Videokamera mit verbesserter Bilderfassung zu entwickeln.

### Gegenstand der Erfindung

Gelöst wird diese Aufgabe mit eines Kamera gemäß Anspruch 1 und einem Verfahren gemäß Anspruch 10.

In einer besonders bevorzugten Ausbildungsform ist an der Digitalkamera oder digitalen Videokamera ein kreisrundes Display zur Anzeige des Bildkreises vorgesehen. Der Fotograf erhält damit die Möglichkeit, den gesamten vom Objektiv entworfenen Bildkreis vor der Aufnahme zu betrachten. Weiterhin kann das gespeicherte Bild nach der Aufnahme betrachtet werden.

In einer vorteilhaften Ausgestaltung weist die Digitalkamera einen kreisrunden Sucher und einen kreisrunden Sensor zur Bilderfassung auf. Diese Elemente sind somit optimal auf den vom Objektiv entworfenen Bildkreis abgestimmt. Auf diese Weise wird die Oberfläche des Sensors und des Sucherfensters optimiert, da keine ungenutzten, überflüssigen Flächenabschnitte entstehen, wie dies rechteckigen Formen der Fall wäre.

Mit einer solchen Digitalkamera entfällt das Verschwenken von Objektiv und/oder Rückstandarte zur Korrektur von Perspektiven. Dadurch wird eine einfachere Handhabung sichergestellt.

Wenn die Mittel zur Erfassung, insbesondere der Sensor, drehbar gelagert sind, kann der Sensor bei gegenüber der Horizontalen geneigter Kamera immer so gedreht werden, dass der Sensor und damit das aufgenommene Bild an der Horizontalen ausgerichtet ist.

Vorteilhafterweise weist die Kamera einen Schrägstellungssensor auf. Damit lässt sich erfassen, wie stark die Kamera gegenüber der Horizontalen geneigt ist und wie weit der Sensor gedreht werden muss. Als Schrägstellungssensor kann beispielsweise ein lot vorgesehen sein.

Bei einer vorteilhaften Weiterbildung ist ein Stellmotor vorgesehen, mit dem die drehbar gelagerten Mittel zur Erfassung entsprechend der durch den Schrägstellungssensor gemessenen Neigung drehbar ist. Der Sensor wird dadurch automatisch horizontal ausgerichtet, ohne dass ein eingreifen des Benutzers notwendig ist.

Vorteilhaft ist es, wenn Mittel zur Auswahl eines oder mehrerer Bildausschnitte aus dem Bildkreis vorgesehen sind. Aus dem Bildkreis können Ausschnitte beliebiger geometrischer Formen und Größe mit Mitteln zur Auswahl ausgewählt werden. Diese Mittel zum auswählen können z.B. Funktionen aktivierende Tasten oder Stifte sein. Es besteht nicht die Gefahr, dass nach der Entwicklung eines Bildes festgestellt wird, dass der falsche Ausschnitt aus dem Bildkreis aufgenommen wurde. Die Auswahl des Bildausschnitts muss nicht vor der Aufnahme vorgenommen werden, sondern kann zu einem beliebigen späteren Zeitpunkt vorgenommen werden. Der Benutzer erhält weiterhin die Möglichkeit, einen Ausschnitt auszuwählen und ihn dann nachträglich zu vergrößern. Die Auswahl der Bildausschnitte findet bevorzugterweise auf dem Display der Kamera statt.

In einer Weiterbildung der erfindungsgemäßen Digitalkamera oder digitalen Videokamera sind Mittel zum Transfer des gespeicherten Bildkreises und/oder der gespeicherten Bildausschnitte zu einem externen Gerät, vorzugsweise einem Computer oder Drucker, vorgesehen. Nach dem Transfer können die gespeicherten Bildkreise oder Bildausschnitte aus dem Speichermedium der Kamera gelöscht werden, so dass Speicherplatz für weitere Aufnahmen zur Verfügung steht. Die transferierten Bildkreise oder Bildausschnitte können an einem Computer mit an sich bekannten Verfahren weiter bearbeitet, gespeichert und ausgedruckt werden. Ferner kann die Auswahl von Bildausschnitten aus dem Bildkreis erst mit dem Computer erfolgen. Dadurch wird in der Digitalkamera kein Speicherplatz für die Bildausschnitte benötigt. Insbesondere bei digitalen Videokameras ist es von Vorteil, wenn in etwa zeitgleich mit dem Schneiden des Films am Computer auch die Bildausschnitte ausgewählt werden können.

In einer weiteren Verfahrensvariante wird mit jedem aufgenommenen Bild ein von dem Neigungssensor gemessener Neigungswert abgespeichert. Ein Bild kann dadurch verzerrt aufgenommen werden. Der Benutzer hat dann die Wahl, später die Entzerrung gemäß dem gespeicherten Neigungswert vorzunehmen, oder das Bild so zu belassen, wie es aufgenommen wurde. Ferner hat er die Möglichkeit, das Bild entzerrt und verzerrt zu speichern bzw. auszugeben.

Eine bevorzugte .erfindungsgemäße Verfahrensvariante zeichnet sich dadurch aus, dass aus einem aufgenommenen Bild bzw. Bildkreis ein Bildausschnitt ausgewählt wird, der anschließend weiterbearbeitet wird. Der Benutzer kann sich nachträglich den Bildausschnitt auswählen, der von besonderem interesse ist. Für eine Aufnahme im Hochformat muss die Kamera nicht mehr gedreht werden. Es genügt, einen hochformatigen Ausschnitt aus dem Bildkreis auszuwählen. Dadurch, dass der gesamte Bildkreis aufgenommen wird, entfällt die Gefahr, wichtige Detailinformationen aus Versehen nicht zu erfassen. Die Möglichkeit, einen Ausschnitt aus einem Bild auszuwählen, erlaubt es, unwichtige Bildinformation, wie z.B. große Vordergründe zu entfernen, wodurch eine Reduktion des Bildes auf das wesentliche erfolgt. Die ausgewählten Ausschnitte können vergrößert werden und mit an sich bekannten Verfahren weiterbearbeitet werden.

Weitere Vorteile der Erfindung ergeben sich aus der Beschreibung und der Zeichnung. Die gezeigte und beschriebene Ausführungsform ist nicht als abschließende Aufzählung zu verstehen, sondern hat vielmehr beispielhaften Charakter für die Schilderung der Erfindung.

### Zeichnung

Ausführungsbeispiele von erfindungsgemäßen Digitalkameras und aus dem Stand der Technik bekannte Gegenstände sind in der schematischen Zeichnung dargestellt und werden in der nachfolgenden Beschreibung erläutert. Es zeigt:

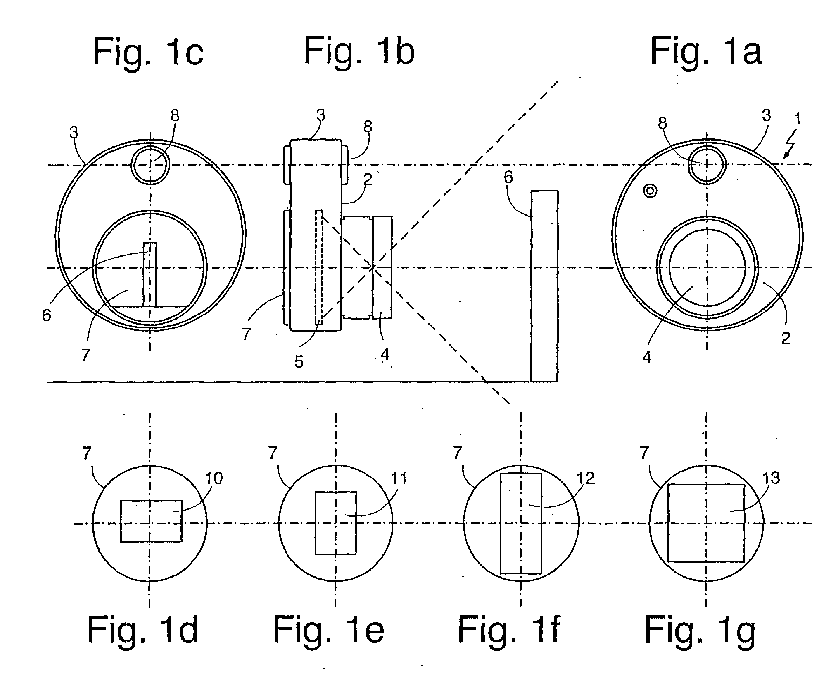

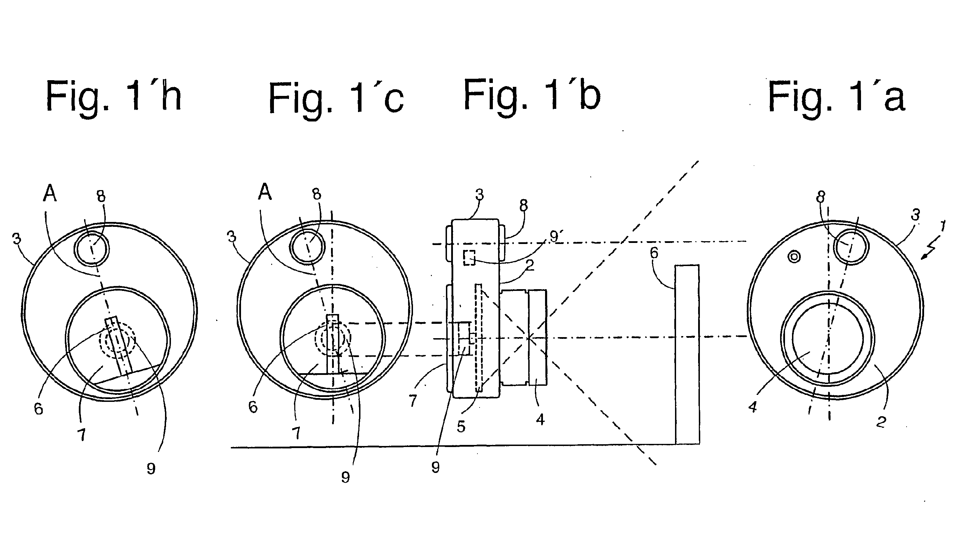

- **Fig. 1a**: eine Vorderansicht einer erfindungsgemäßen Digitalkamera;
- **Fig. 1 b**: eine Seitenansicht der Digitalkamera nach Fig. 1 a;
- **Fig. 1c**: eine Rückansicht der Digitalkamera nach Fig. 1a und 1b;
- **Fig.1'a**: eine Vorderansicht einer schräg gestellten erfindungsgemäßen Digitalkamera;
- **Fig. 1'b**: eine Seitenansicht der Digitalkamera nach Fig. 1'a;
- **Fig. 1'c**: eine Rückansicht der Digitalkamera nach Fig. 1'a und 1'b;
- **Fig. 1'h**: die Digitalkamera der Fign. 1'a bis 1'c mit ausgerichtetem Sensor;
- **Fig. 1 d bis 1g**: schematische Darstellungen der vom Objektiv der in der Fig. 1a gezeigten Digitalkamera entworfenen Bildkreise;
- **Fig. 2a**: eine Draufsicht einer Großbildkamera des Standes der Technik mit zentriertem Objektiv;
- **Fig. 2b**: eine schematische Darstellung des vom Objektiv der in der Fig. 2a gezeigten Kamera entworfenen Bildkreises und des zur Abbildung gebrachten Teils des Bildkreises;
- **Fig. 3a**: eine Draufsicht einer Großbildkamera des Standes der Technik mit nach der Seite verschobenem Objektiv;
- **Fig. 3b**: eine schematische Darstellung des vom Objektiv der in der Fig. 3a gezeigten Kamera entworfenen Bildkreises und des zur Abbildung gebrachten Teils des Bildkreises.
- **Fig. 4a**: eine Bildaufnahme mit einer erfindungsgemäßen Digitalkamera;
- **Fig. 4b**: eine Rückansicht der Digitalkamera nach Fig. 4a;
- **Fig. 5a**: ein ohne perspektivische Entzerrung aufgenommenes Bild;
- **Fig. 5b**: das Bild der Fig. 5a nach perspektivischer Entzerrung;
- **Fig. 5c**: ein optimiertes Bild nach Fign. 5a und 5b;
- **Fig. 6a**: eine Bildaufnahme mit einer Kamera nach dem Stand der Technik;
- **Fig. 6b**: das aufgenommene Bild nach Fig. 6a;
- **Fig. 7a**: eine weitere Bildaufnahme mit einer Kamera nach dem Stand der Technik;
- **Fig. 7b**: das aufgenommene Bild nach Fig. 7a;
- **Fig. 8**: ein Ausführungsbeispiel einer digitalkamera mit drehbarem Sensor;
- **Fig. 9**: eine Digitalkamera des Standes der Technik mit fest stehendem Sensor.

### Beschreibung von Ausführungsbeispielen der Erfindung

In den **Fign. 1a bis 1c** ist eine Digitalkamera 1 schematisch dargestellt. Auf der Vorderseite 2 des Gehäuses 3 ist ein Objektiv 4 mit einer Linse angebracht. Mit Hilfe des Objektivs 4 erfolgt eine Projektion eines Bildes auf einen runden Sensor 5 im Inneren der Digitalkamera 1. Der lichtempfindliche Sensor 5 ist als Scanner oder Chip ausgebildet, von dem das Bild elektronisch erfasst wird. Der lichtempfindliche Sensor 5 ist meist scheibenförmig. Die Linse des an sich bekannten Objektivs 4 ist kreisrund, so dass auch das projizierte Bild hinter dem Objektiv kreisrund ist. Dieses kreisrunde Bild wird als vom Objektiv 4 entworfener, einen abzubildenden Gegenstand 6 enthaltenden Bildkreis bezeichnet (siehe Fig. 1d bis 1g). Die im Bildkreis enthaltene Bildinformation wird vom Sensor 5 elektronisch erfasst und digitalisiert. Die im Bildkreis enthaltene Bildinformation kann über ein ebenfalls kreisrundes Display 7 vom Benutzer betrachtet werden. Da Displays 7 in der Regel einen hohen Stromverbrauch haben, kann das Display auch abgeschaltet werden und der Benutzer kann das aufzunehmende Bild durch einen optischen Sucher 8 betrachten. Der optische Sucher 8 ist ebenfalls kreisrund ausgebildet, so dass mit Hilfe des Suchers die gleiche gesamte Bildinformation eingesehen werden kann, wie sie mittels des Objektivs 4 als Bildkreis abgebildet wird. Hat der Benutzer das projizierte Bild betrachtet und akzeptiert, so kann er das im Sucher 8 oder auf dem Display 7 angezeigte Bild durch Betätigen des Auslösers in digitalisierter Form speichern. Die Speicherung erfolgt in einem entsprechenden Speichermedium. Das Speichermedium, wie z.B. ein Chip, ist entweder in die Kamera integriert oder herausnehmbar, so dass die digitalisierte Bildinformation z.B. zu einem Computer transferiert werden kann.

Die **Fign. 1'a bis 1'c** zeigt die Digitalkamera der Fign. 1a bis 1c in einer schrägen Stellung. In einem solchen Fall wird das Objekt in einem Winkel zu der Achse A aufgenommen. Das aufgenommene Bild kann nachträglich oder gleichzeitig digital gedreht werden, so dass eine Ausrichtung an der Achse A erfolgt. Alternativ kann ein Stellmotor 9 für den Sensor 5 vorgesehen sein, der entsprechend der von einem Schrägstellungsensor 9' gemessenen Schrägstellung gedreht wird, so dass das aufgenommene Bild zu der Achse A ausgerichtet ist, wie dies in der Fig. 1'h dargestellt ist.

Aus den **Fign. 1d bis 1g** ist die Verwendung des bereits angesprochenen vollständigen kreisrunden Bildkreises verständlich, der vom Objektiv 4 der Digitalkamera 1 entworfen wird. Dieser gesamte Bildkreis wird gespeichert. Der Benutzer erhält die Möglichkeit, nach der Speicherung des Bildkreises aus dem Bildkreis einen oder mehrere Bildausschnitte 10, 11, 12, 13 auszuwählen. Dabei kann er die Position des Bildausschnitts 10, 11, 12, 13, die geometrische Form und die Größe des Bildausschnitts 10, 11, 12, 13 wählen bzw. selbst bestimmen. Ein ausgewählter Bildausschnitt 10, 11, 12, 13 kann auch noch nachträglich vergrößert werden, so dass ein vergrößerter Bildausschnitt entsteht, der wiederum gespeichert werden kann oder über ein Ausgabemedium, wie z.B. einen Drucker ausgegeben werden kann.

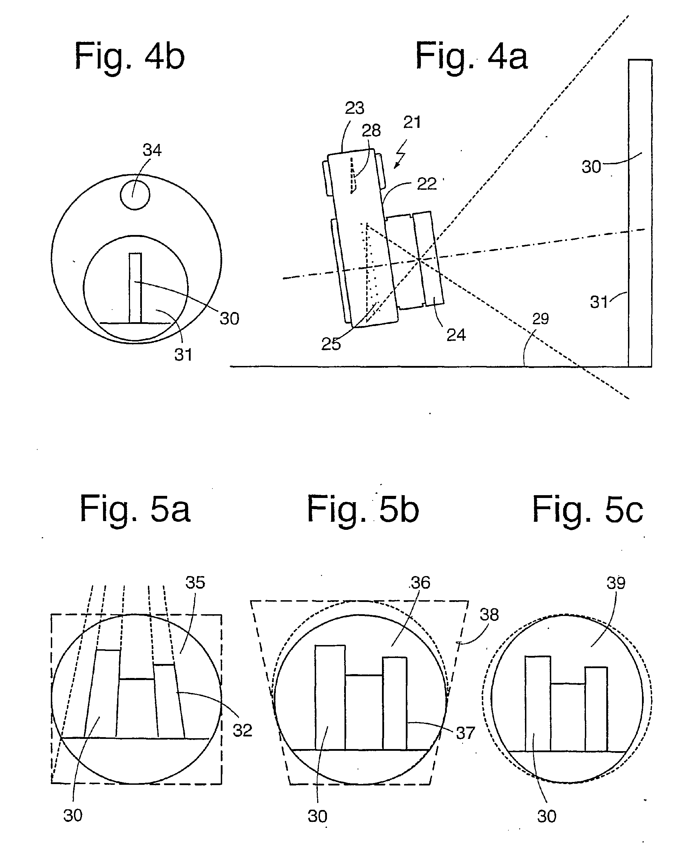

In der **Fig. 4** ist eine Digitalkamera 21 schematisch dargestellt. Auf der Vorderseite 22 des Gehäuses 23 ist ein Objektiv 24 mit einer Linse angebracht. Mit Hilfe des Objektivs 24 erfolgt eine Projektion eines Bildes auf einen Sensor 25 im Inneren der Digitalkamera 21. Der lichtempfindliche Sensor 25 ist als Scanner oder Chip ausgebildet, von dem das Bild elektronisch erfasst wird. Der lichtempfindliche Sensor 25 ist meist scheibenförmig ausgebildet. Die Linse des an sich bekannten Objektivs 24 ist kreisrund, so dass auch das projizierte Bild hinter dem Objektiv kreisrund ist. Allerdings bestimmt sich das Format des aufgenommenen Bildes durch das Format des Sensors 25. Im Stand der Technik ist der Sensor 25 häufig rechteckförmig und nimmt deshalb nur einen Ausschnitt des vom Objektiv 24 projizierten Bildes auf. Dieses projizierte Bild wird als vom Objektiv 24 entworfener Bildkreis bezeichnet. Soll der gesamte Bildkreis aufgenommen werden, so ist der Sensor 25 ebenfalls kreisrund ausgebildet. Die auf den Sensor 25 projizierte Bildinformation wird vom Sensor 25 elektronisch erfasst und digitalisiert. Die Digitalkamera weist weiterhin einen ersten Neigungssensor 28 auf. Mit dem ersten Neigungssensor 28 wird die Neigung des Sensors 25 gegen die Horizontale 29 gemessen. Bei der Aufnahme von Objekten 30, die zur Horizontalen 29 senkrechte Linien 31 aufweisen, werden die senkrechten Linien nur als senkrechte Linien abgebildet, wenn der Sensor 25 ebenfalls senkrecht zur Horizontalen 29 steht. Ist die Sensorfläche gegen die Horizontale geneigt, so werden die senkrechten Linien 31 in der Abbildung zu stürzenden Linien 32 (Fig. 5a). Mittels der vom Neigungssensor 28 gemessenen Neigung kann das vom Objektiv 24 entworfene Bild derart perspektivisch entzerrt werden, dass die abgebildeten Linien auch bei geneigter Digitalkamera im Bild wieder senkrecht sind (Fig. 5b). Die Entzerrung gemäß dem gemessenen Neigungswert kann automatisch schon vor der Aufnahme erfolgen, so dass das perspektivisch entzerrte Bild über ein Display 33 vom Benutzer betrachtet werden kann. Da Displays 33 in der Regel einen hohen Stromverbrauch haben, kann das Display auch abgeschaltet werden und der Benutzer kann das aufzunehmende Bild durch einen optischen Sucher 34 betrachten. Ist der Neigungssensor 28 deaktiviert, so wird auf dem Display 33 bzw. im Sucher das verzerrte, vom Objektiv 34 entworfene Bild angezeigt. Hat der Benutzer das projizierte Bild betrachtet und akzeptiert, so kann er das im Sucher 34 oder auf dem Display 33 angezeigte Bild durch Betätigen des Auslösers in digitalisierter Form speichern. Die Speicherung erfolgt in einem entsprechenden Speichermedium. Das Speichermedium, wie z.B. ein Chip, ist entweder in die Kamera integriert oder herausnehmbar, so dass die digitalisierte Bildinformation z.B. zu einem Computer transferiert werden kann. Ferner ist es möglich, die Bilder entzerrt zu speichern und mit jedem Bild die gemessene Neigung zu speichern. Dem Benutzer stehen außerdem Mittel zur Verfügung, mit denen er ein Bild vor oder nach der Aufnahme gemäß seinen Wünschen entzerren oder verzerren kann.

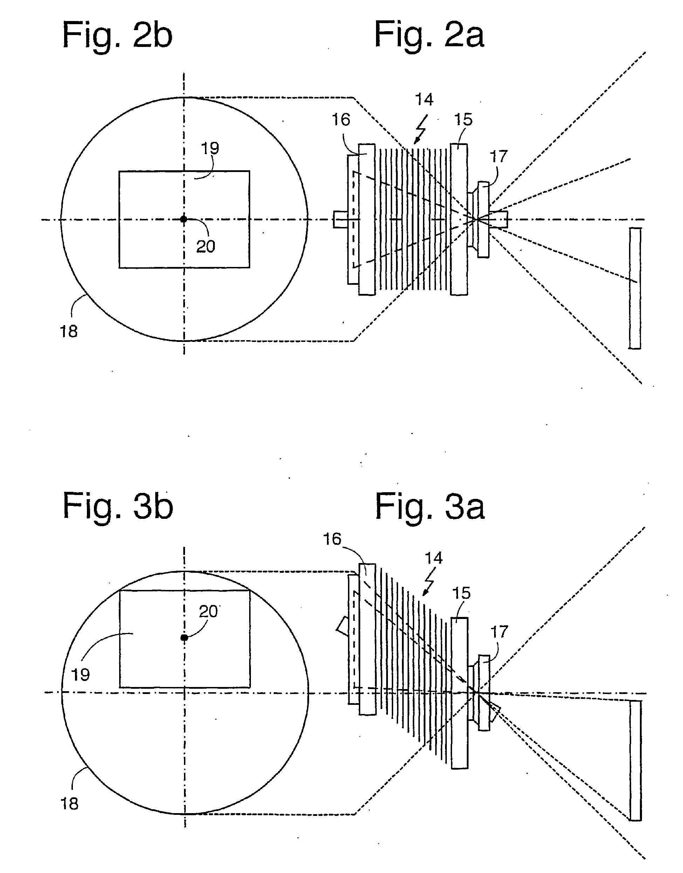

Die **Fig. 5a** zeigt ein Bild 35, wie es von einer geneigten Digitalkamera ohne Entzerrung aufgenommen wird. Wenn der Sensor 35 einer geneigten Digitalkamera nicht parallel zu Objekten 30 mit senkrechten Linien 31 ausgerichtet ist, werden diese Objekte nicht mit senkrechten, sondern mit sogenannten stürzenden Linien 32 abgebildet. Fig. 2a zeigt auch die Ausrichtung der stürzenden Linien an einem Fluchtpunkt.

Bei dem in der **Fig. 5b** gezeigten Bild 36 wurde das vom Objektiv entworfene Bild perspektivisch gemäß der vom Neigungssensor 28 gemessenen Neigung so entzerrt, dass die senkrechten Linien 31 des fotografierten Objekts 30 im Bild 36 als senkrechte Linien 37 erscheinen. Durch die perspektivische Entzerrung wird das von einem rechteckigen Sensor 35 aufgenommene Bild zu einem in der Länge und/oder Breite gegenüber dem Rechteck nach Fig. 5a gestreckten Trapez 38 verformt. Soll das Format des Bildes beibehalten werden, so werden die von der gestrichelten Linie begrenzten Bereiche entfernt. Wird ein Objekt 30 im Hochformat, d.h. bei gedrehter Digitalkamera fotografiert, so muss der Neigungssensor 28, bzw. ein zweiter Neigungssensor auch die Neigung der Kamera in dieser Orientierung erfassen. Fig. 5c zeigt ein vollständig optimiertes Bild 39.

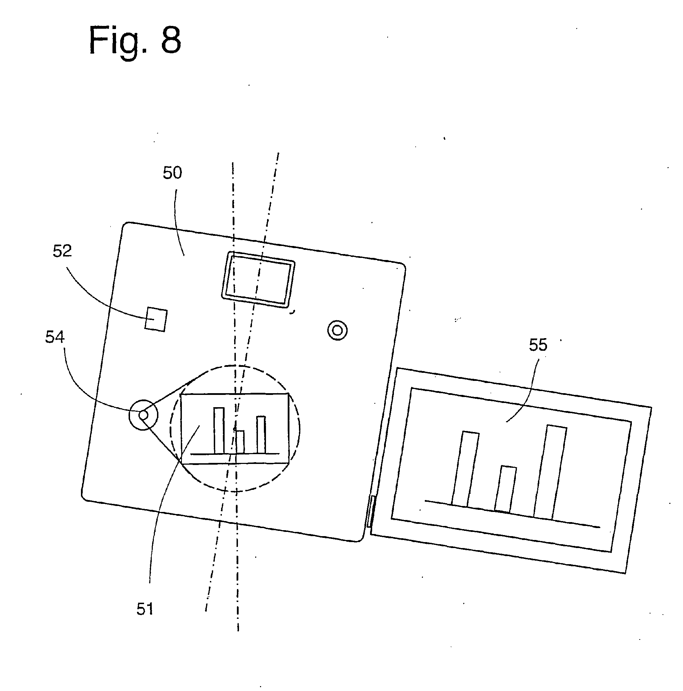

In **Fig. 8** ist eine Digitalkamera 50 mit rechteckiger Sensorfläche 51 dargestellt. Die Digitalkamera 50 ist schräg gestellt. Die Schrägstellung wird von einem Schrägstellungssensor 52 erfasst. Entsprechend der Schrägstellung wird die Sensorfläche über einen Stellmotor 54 gedreht, so dass auf dem Display 55 ein Bild erscheint, wie es bei nicht schräg stehender Kamera aufgnommen worden wäre. Das Bild kann in dieser Orientierung abgespeichert werden. Anstatt einer rechteckigen Sensorfläche kann auch eine kreisrunde Sensorfläche vorgesehen sein.

### Erläuterung von Gegenständen aus dem Stand der Technik

In **Fig. 2a** ist eine aus dem Stand der Technik bekannte Grossbildkamera 14 dargestellt. Die Grossbildkamera 14 weist eine Vorderstandarte 15 mit Balg auf, an dessen hinterem Ende sich eine Rückstandarte 16 befindet. In dieser Rückstandarte 16 wird die Mattscheibe oder Filmkassette gehalten, die das vom Objektiv 17 entworfene Bild aufnimmt. In der Fig. 2a ist das Objektiv 17 nicht relativ zur restlichen Grossbildkamera 14, insbesondere nicht relativ zu der Rückstandarte 16 versetzt angeordnet.

Das Objektiv 17 der in Fig. 2a gezeigten Grossbildkamera 14 entwirft einen in der **Fig. 2b** gezeigten Bildkreis 18. Der entworfene Bildkreis 18 ist größer als die Größe der von der Rückstandarte 16 gehaltenen Mattscheibe. Von der Grossbildkamera 14 wird also nur ein Bildausschnitt 19 des Bildkreises 18 aufgenommen, dessen Größe der Größe der Mattscheibe entspricht. Der Mittelpunkt 20 des Bildausschnitts 19 entspricht in diesem Fall dem Mittelpunkt des Objektivs 17. Das Objektiv 17 der Grossbildkamera der Fig. 2a würde nicht versetzt angeordnet und somit befindet sich der von der Großbildkamera 14 aufgenommene Bildausschnitt 19 etwa im Zentrum des Bildkreises 18.

Soll ein anderer Bildausschnitt des Bildkreises aufgenommen werden, so müssen bei gleichbleibender Kameraposition Objektiv 17 und Rückstandarte 16 relativ zueinander verschoben werden.

**Fig. 3a** zeigt ebenfalls die Grossbildkamera 14 der Fig. 2a, wobei in diesem Fall das Objektiv 17 der Grossbildkamera 14 nach der Seite verschoben ist, d.h. es ist relativ zu der Rückstandarte 16 verschoben.

**Fig. 3b** zeigt den bereits aus der Fig. 2b bekannten Bildkreis 18 und den entsprechenden Bildausschnitt 19. Durch das Verschieben des Objektivs 17 wurde der vom Objektiv entworfene Bildkreis 18 auch nach der Seite verschoben. Die Position der Rückstandarte 16 blieb aber gleich, so dass ein ebenfalls verschobener Bildausschnitt 19 im seitlichen Bereich des Bildkreises 18 aufgenommen wird. Den gleichen Effekt in umgekehrter Richtung hätte man erzielt, wenn die Position des Objektivs 17 beibehalten worden wäre und die Rückstandarte 16 nach der anderen Seite verschoben worden wäre.

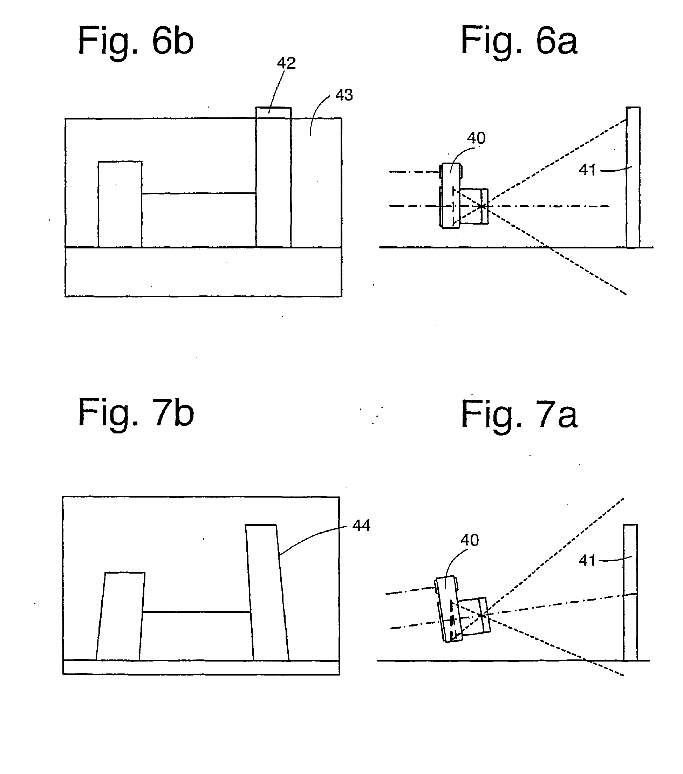

Die Fign. 6 und 7 demonstrieren die Probleme, die bei der Bildaufnahme mit einer Kamera des Standes der Technik auftreten.

Wenn der Sensor der Kamera 40 parallel zu dem Objekt 41 ausgerichtet ist (**Fig. 6a**), werden stürzende Linien vermieden. Es fehlt aber ein Teil 42 des Objektes 41 auf der Abbildung 43 (**Fig. 6b**).

Wenn der Sensor der Kamera 40 geneigt zu dem Objekt 41 angeordnet ist (Fig. 7a), treten stürzende Linien auf (**Fig. 7b**).

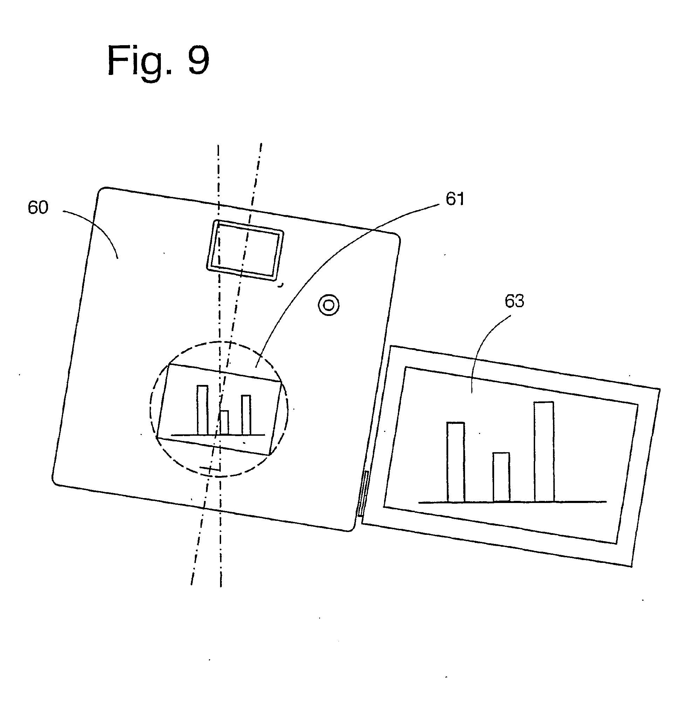

In **Fig. 9** ist eine Digitalkamera 60 des Standes der Technik beschrieben, bei der keine Drehung des Sensors 61 vorgesehen ist. Bei schräg gestellter Digitalkamera 60 erscheint das Bild auf dem Display 63 ebenfalls schräg und kann nur so abgespeichert werden. Die Erläuterungen gelten in ähnlicher Weise auch für eine Videokamera.

## Patentansprüche

1. Digitalkamera (1, 21, 50) oder digitale Videokamera mit einem Objektiv (4, 24), mit einem Sensor (5, 25, 51) zur Erfassung und Digitalisierung der Bildinformation und mit Mitteln zum Speichern der digitalisierten Bildinformation, wobei die Kamera (1, 21, 50) einen Neigungssensor (28) zur Erfassung der Neigung der Kamera (1, 21, 50) gegen die Horizontale aufweist, und wobei
die Kamera (1, 21, 50) Mittel aufweist zum rechnerischen Entzerren der digitalisierten Bilder anhand der vom Neigungssensor (28) gemessenen Neigung derart, dass reale senkrechte Linien (31) als senkrechte Linien (37) abgebildet werden, und wobei der Sensor (5, 25, 51) zur Erfassung der gesamten durch das Objektiv (4, 24) abgebildeten und in einem Bildkreis enthaltenen Bildinformation vorgesehen ist.

2. Digitalkamera (1, 21, 50) oder digitale Videokamera nach Anspruch 1
**dadurch gekennzeichnet ,**
**dass** ein Schrägstellungssensor (9', 52) zur Erfassung der Schrägstellung der Kamera (1, 21, 50) um eine senkrecht zur Sensorebene verlaufende Achse vorgesehen ist, und
**dass** Mittel zur automatischen Korrektur der Schrägstellung in die Horizontale vorgesehen sind.

3. Kamera nach Anspruch 2,
**dadurch gekennzeichnet ,**
**dass** der Sensor (5, 25, 51) zur Erfassung und Digitalisierung der Bildinformation um eine senkrecht zur Sensorebene verlaufende Achse drehbar gelagert und entsprechend der durch den Schrägstellungssensor (9', 52) gemessenen Schrägstellung automatisch an der Horizontalen ausrichtbar ist.

4. Kamera nach Anspruch 3,
**dadurch gekennzeichnet ,**
**dass** ein Stellmotor (9, 54) zur Drehung des Sensors (5, 25, 51) zur Erfassung und Digitalisierung der Bildinformation vorgesehen ist.

5. Kamera nach Anspruch 2,
**dadurch gekennzeichnet ,**
**dass** Mittel zur rechnerischen Drehung der Bildinformation in die Horizontale entsprechend der durch den Schrägstellungssensor (9') gemessenen Schrägstellung vorgesehen sind.

6. Kamera nach einem der vorhergehenden Ansprüche,
**dadurch gekennzeichnet ,**
**dass** die vom Neigungssensor (28) gemessene Neigung und/oder der Bildwinkel gemeinsam mit der Bildinformation speicherbar ist.

7. Kamera nach einem der vorhergehenden Ansprüche,
**dadurch gekennzeichnet ,**
**dass** Mittel zur Auswahl eines oder mehrerer Bildausschnitte aus der erfassten Bildinformation vorgesehen sind.

8. Kamera nach einem der vorhergehenden Ansprüche,
**dadurch gekennzeichnet ,**
**dass** Mittel zum Transfer der gespeicherten Bilder und/oder von gespeicherten Bildausschnitten (10, 11, 12, 13) zu einem externen Gerät, vorzugsweise einem Computer oder Drucker, vorgesehen sind.

9. Kamera nach einem der vorhergehenden Ansprüche,
**dadurch gekennzeichnet ,**
**dass** die Kamera ein kreisrundes Display (7) und/oder einen kreisrunden Sucher (8) und einen kreisrunden Sensor (5, 25) aufweist.

10. Verfahren zur Erfassung und Bearbeitung von digitalisierten Bildern
mit einer Digitalkamera oder einer digitalen Videokamera, wobei ein sensor (5,25,51) zu Erfassung der gesamter durch das Objektiv (4,24) abgebildesen und in linen Bildkreis enthaltenen Bildinformation verwendet wird und
die digitalisierten Bilder automatisch gemäß der von einem Neigungssensor (28) erfassten Neigung derart entzerrt werden, dass reale senkrechte Linien (31) als senkrechte Linien (37) abgebildet werden.

11. Verfahren zur Erfassung und Bearbeitung von digitalisierten Bildern mit einer Digitalkamera oder einer digitalen Videokamera, nach Anspruch 10,
**dadurch gekennzeichnet ,**
**dass** die Schrägstellung der Kamera (1, 21, 50) um eine senkrecht zur Sensorebene verlaufende Achse durch einen Schrägstellungssensor (9', 52) erfasst wird, und
**dass** die Schrägstellung automatisch in die Horizontale korrigiert wird.

12. Verfahren nach einem der Ansprüche 10 und 11,
**dadurch gekennzeichnet ,**
**dass** mit einem digitalisierten Bild die von dem Neigungssensor (28) erfasste Neigung und/oder der Bildwinkel abgespeichert wird.

13. Verfahren nach einem der Ansprüche 10 bis 12,
**dadurch gekennzeichnet ,**
**dass** aus einem aufgenommenen Bild ein Bildausschnitt (10, 11, 12, 13) ausgewählt wird, der anschließend weiter bearbeitet wird.

## Claims

1. A digital camera (1, 21, 50) or a digital video camera having a lens element (4, 24), having a sensor (5, 25, 51) for capturing and digitizing image information and having means for storing the digitized image information
wherein the camera (1, 21, 50) has an inclination sensor (28) for the detection of the inclination of the camera (1, 21, 50) with respect to the horizontal, and
wherein the camera (1, 21, 50) has means for the straightening up by calculation of the digitized images with reference to the inclination measured by the inclination sensor (28) such that real vertical lines (31) are imaged as vertical lines (37), and
wherein
the sensor (5, 25, 51) is provided for the capturing of the entire image information imaged by the lens element (4, 24) and contained in an image circle.

2. A digital camera (1, 21, 50) or a digital video camera having a lens element (4, 24), having a sensor (5, 25, 51) for capturing and digitizing image information and having means for storing the digitized image information
wherein the camera (1, 21, 50) has an inclination sensor (28) for the detection of the inclination of the camera (1, 21, 50) with respect to the horizontal, and
wherein the camera (1, 21, 50) has means for the straightening up by calculation of the digitized images with reference to the inclination measured by the inclination sensor (28) such that real vertical lines (31) are imaged as vertical lines (37), and
wherein
the sensor (5, 25, 51) is provided for the capturing of the entire image information imaged by the lens element (4, 24) and contained in an image circle,
**characterized in that**
an oblique position sensor (9', 52) is provided around an axis extending perpendicular to the sensor plane for the detection of the oblique position of the camera (1, 21, 50); and
**in that** means are provided for the automatic correction of the oblique position into the horizontal.

3. A camera in accordance with claim 2, **characterized in that** the sensor (5, 25, 51) for the capturing and digitizing of the image information is rotatably supported around an axis extending perpendicular to the sensor plane and can be automatically aligned at the horizontal in accordance with the oblique position measured by the oblique position sensor (9', 52).

4. A camera in accordance with claim 3, **characterized in that** an actuator motor (9, 54) is provided for the rotation of the sensor (5, 25, 51) for the capturing and digitizing of the image information.

5. A camera in accordance with claim 2, **characterized in that** means are provided for the calculated rotation of the image information into the horizontal in accordance with the oblique position measured by the oblique position sensor (9').

6. A camera in accordance with any one of the preceding claims, **characterized in that** the inclination measured by the inclination sensor (28) and/or the image angle can be stored together with the image information.

7. A camera in accordance with any one of the preceding claims, **characterized in that** means are provided for selecting one or more image excerpts from the image information captured.

8. A camera in accordance with any one of the preceding claims, **characterized in that** means are provided for the transfer of stored images and/or of stored image excerpts (10, 11, 12, 13) to an external device, preferably a computer or printer.

9. A camera in accordance with any one of the preceding claims, **characterized in that** the camera has a circular display (7) and/or a circular viewfinder (8) and a circular sensor (5, 25).

10. A method for capturing and processing digitized images with a digital camera (1, 21, 50) or a digital video camera,
wherein a sensor (5, 25, 51) is used for the capturing of the entire image information imaged by the lens element (4, 24) and contained in an image circle; and
wherein the digitized images are straightened up automatically in accordance with an inclination measured by the first inclination sensor (28) such that real vertical lines (31) are imaged as vertical lines (37).

11. A method for capturing and processing digitized images with a digital camera or a digital video camera in accordance with claim 10, **characterized in that** the oblique position of the camera (1, 21, 50) around an axis extending perpendicular to the plane of the sensor is detected by an oblique position sensor (9', 52); and **in that** the oblique position is corrected automatically into the horizontal.

12. A method in accordance with any one of the claims 10 and 11, **characterized in that** the inclination detected by the inclination sensor (28) and/or the image angle is/are stored with a digitized image.

13. A method in accordance with any one of the claims 10 to 12, **characterized in that** an image excerpt (10, 11, 12, 13) is selected from a recorded image and is subsequently further processed.

## Revendications

1. Appareil photo numérique (1, 21, 50) ou caméra vidéo numérique, comprenant un objectif (4, 24), un capteur (5, 25, 51) pour détecter et pour numériser les informations d'image, et des moyens pour mémoriser les informations d'images numérisées, ledit appareil (1, 21, 50) comprenant un capteur d'inclinaison (28) pour détecter l'inclinaison de l'appareil (1, 21, 50) par rapport à l'horizontale, et dans lequel l'appareil ou la caméra (1, 21, 50) comprend des moyens pour supprimer par calcul les distorsions des images numérisées à l'aide de l'inclinaison mesurée par le capteur d'inclinaison (28) de telle façon que les lignes réellement verticales (31) sont rendues en image sous forme de lignes verticales (3 7) et dans lequel le détecteur (5, 25, 51) est prévu pour détecter la totalité des informations d'image restituées à travers l'objectif (4, 24) et contenues dans un cercle image.

2. Appareil photo numérique (1, 21, 50) ou caméra vidéo numérique selon la revendication 1, **caractérisé en ce qu'**il est prévu un détecteur de situation oblique (9', 52) pour détecter la situation oblique de l'appareil (1, 21, 50) autour d'un axe perpendiculaire au plan du détecteur, et **en ce qu'**il est prévu des moyens pour corriger automatiquement la situation oblique vers l'horizontale.

3. Appareil selon la revendication 2, **caractérisé en ce que** le détecteur (5, 25, 51) destiné à la détection et à la numérisation des informations d'image est monté avec possibilité de rotation autour d'un axe perpendiculaire au plan du détecteur et susceptible d'être aligné automatiquement par rapport à l'horizontale et en fonction de la situation oblique mesurée par le détecteur de situation oblique (9', 52).

4. Appareil selon la revendication 3, **caractérisé en ce qu'**il est prévu un moteur de positionnement (9, 54) pour la rotation du détecteur (5, 25, 51) destiné à la détection et à la numérisation des informations d'image.

5. Appareil selon la revendication 2, **caractérisé en ce qu'**il est prévu des moyens pour effectuer une rotation par calcul des informations d'image vers l'horizontale, en fonction de la situation oblique mesurée par le détecteur de situation oblique (9').

6. Appareil selon l'une des revendications précédentes, **caractérisé en ce que** l'inclinaison mesurée par le capteur d'inclinaison (28) et/ou l'angle de l'image peut être mémorisé conjointement avec les informations d'image.

7. Appareil selon l'une des revendications précédentes, **caractérisé en ce qu'**il est prévu des moyens pour sélectionner un ou plusieurs extraits d'image à partir des informations d'image saisies.

8. Appareil selon l'une des revendications précédentes, **caractérisé en ce qu'**il est prévu des moyens pour transférer les images mémorisées et/ou des extraits d'image mémorisés (10, 11, 12, 13) vers un dispositif externe, de préférence un ordinateur ou une imprimante.

9. Appareil selon l'une des revendications précédentes, **caractérisé en ce que** l'appareil comprend un affichage circulaire (7) et/ou un viseur circulaire (5, 25).

10. Procédé pour détecter et pour travailler des images numérisées avec un appareil photo numérique ou une caméra vidéo numérique, dans lequel on utilise un détecteur (5, 25, 51) pour détecter la totalité des informations d'image produites à travers l'objectif (4, 24) et contenues dans un cercle d'image, et dans lequel la distorsion des images numérisées est automatiquement supprimée en fonction de l'inclinaison détectée par un détecteur d'inclinaison (28) de telle sorte que des lignes réellement verticales (31) sont reproduites comme des lignes verticales (37).

11. Procédé pour détecter et pour travailler des images numérisées avec un appareil photo numérique ou une caméra vidéo numérique selon la revendication 10, **caractérisé en ce que** la situation oblique de l'appareil (1, 21, 50) autour d'un axe perpendiculaire au plan du détecteur est détectée par un détecteur de situation oblique (9', 52), et **en ce que** la situation oblique est corrigée automatiquement vers l'horizontale.

12. Procédé selon l'une des revendications 10 et 11, **caractérisé en ce que** l'inclinaison et/ou l'angle de l'image, détectée par le détecteur d'inclinaison (28) est mémorisé conjointement avec une image numérisée.

13. Procédé selon l'une des revendications 10 à 12, **caractérisé en ce que** l'on choisit un extrait d'image (10, 11, 12, 13) à partir d'une image prise, qui est ensuite retravaillé.
